# FASCICULE DE BREVET EUROPEEN

(11) **EP 4 039 920 B1**
(45) Date de publication et mention de la délivrance du brevet: **13.12.2023**
(21) Numéro de dépôt: 22155722.6
(22) Date de dépôt: 08.02.2022
(51) Int. Cl.: E04H 15/10, E04H 15/12

(54) **STRUCTURE DÉMONTABLE COMPORTANT UNE TOILE CHAUFFANTE**
DEMONTIERBARE STRUKTUR MIT EINEM HEIZBAREN GEWEBE
DISMOUNTABLE STRUCTURE COMPRISING A HEATING FABRIC

(30) Priorité: 08.02.2021 FR 2101181
(43) Date de publication de la demande: 10.08.2022
(73) Titulaire: Karagoz, Efraim, 95110 Sannois (FR)
(72) Inventeur: Karagoz, Efraim, 95110 Sannois (FR)
(74) Mandataire: Oak & Fox

(56) Documents cités:
- WO-A1-01/11291
- CN-U- 210 032 861
- CN-U- 210 828 578
- KR-A- 20150 050 972
- KR-A- 20200 142 437
- KR-B1- 101 929 827

## Description

### Domaine de l'invention

Le domaine de l'invention se rapporte au domaine des structures démontables. En particulier, le domaine de l'invention se rapporte au domaine des structures démontables comportant au moins un élément apte à stocker de l'énergie. Plus particulièrement, le domaine de l'invention se rapporte au domaine des structures démontables comportant une toile, au moins un élément apte à stocker de l'énergie électrique et comportant au moins un élément apte à émettre de la chaleur.

### État de la technique

Actuellement, on connaît dans l'art antérieur des structures démontables comportant des toiles, notamment des tentes démontables, telles que décrites dans KR20150050972A. Par exemple, la demande de brevet FR2339029 concerne une construction légère démontable, notamment une tente de camping, comportant une armature destinée à supporter un revêtement formant les parois de la construction. Une telle structure démontable présente des inconvénients, notamment liés au confort et à la sécurité des occupants. En effet, une telle structure démontable n'est pas adaptée dans le cas de conditions extérieures défavorables, notamment en été et en hiver ou plus particulièrement lorsque les températures extérieures sont défavorables au confort et à la sécurité d'un être humain occupant ladite structure démontable.

De plus, la maîtrise de la température interne d'une structure démontable comportant une toile devient particulièrement nécessaire dans le cas où ladite structure est destinée à accueillir un nouveau-né ou un enfant en bas âge. En effet, la mort subite du nourrisson est la première cause de décès des enfants dont l'âge se situe entre un mois et un an. En France, chaque année, près de cinq cents enfants en bonne santé décèdent dans leur sommeil. Bien que les mécanismes exacts de la mort subite du nourrisson soient encore méconnus, il existe un certain nombre de précautions à prendre qui permettent de limiter considérablement les risques de la survenue d'un tel drame. Parmi ces précautions, il convient notamment de maintenir la température ambiante de la zone dans laquelle l'enfant est endormi comprise entre dix-huit et dix-neuf degrés Celsius. Une solution simple consiste alors en l'adaptation des couches de vêtements de l'enfant ou l'utilisation de couvertures pour assurer un maintien optimal de la température. Cependant, une autre précaution à prendre pour limiter les risques consiste à éviter tout élément pouvant entraver la respiration de l'enfant endormi. Dès lors, il convient de déterminer une solution permettant de maintenir une température optimale en évitant l'utilisation de tout type d'éléments présentant un risque d'entrave de la respiration de l'enfant. L'invention vise à résoudre les inconvénients précités en proposant une structure démontable comportant une toile et dont la température interne peut être modifiée par la présence d'éléments chauffants en contact avec ladite toile. Un autre avantage de l'invention est notamment qu'une telle structure est adaptée pour être occupée par une personne âgée pour qui les variations de température peuvent présenter un risque considérable. Une telle structure présente également un avantage pour une personne blessée et plâtrée au niveau d'un membre. La personne blessée peut alors déposer son membre plâtré au sein de la structure chauffante pour favoriser le soin de sa blessure. Enfin, une telle structure présente un avantage pour l'accueil d'un enfant malade, notamment pour que l'enfant puisse se reposer dans des conditions de températures optimales.

### Résumé de l'invention

Selon un premier aspect, l'invention concerne une structure démontable comportant :
- une toile comprenant au moins une ouverture;
- une pluralité d'éléments de support aptes à supporter ladite toile;

▪ au moins un élément de stockage d'énergie électrique ;
   la structure démontable étant caractérisée en ce que au moins un élément de stockage d'énergie électrique est configuré pour fournir une quantité d'énergie électrique à au moins un élément émetteur de chaleur en contact avec la toile, ledit au moins un élément émetteur de chaleur étant configuré pour émettre une quantité d'énergie thermique vers une zone intérieure de la structure démontable, ladite zone intérieure étant délimitée par une surface intérieure de la toile.

Dans un mode de réalisation, la structure démontable comprend au moins un élément de refroidissement apte à abaisser la température de l'air situé dans la zone intérieure. Un avantage est de pouvoir adapter la température de la zone intérieure de la structure démontable selon les besoins spécifiques en conditions de température d'un occupant.

Dans un mode de réalisation, l'élément de refroidissement comprend un organe rotatif ape à brasser une portion de l'air situé dans la zone intérieure. Un avantage est de faciliter le renouvellement de l'air de la zone intérieure tout en abaissant la température.
. Un avantage est d'optimiser l'espace de la zone intérieure tout en limitant les risques de contact entre l'occupant et les éléments de stockage d'énergie électrique. Un autre avantage est d'améliorer la stabilité de la structure démontable.

Dans un mode de réalisation, la structure démontable comprend une toile de sol, ladite toile de sol étant en contact avec un élément émetteur de chaleur et/ou un élément de refroidissement. Un avantage est d'étendre la surface d'échange thermique pour augmenter les transferts thermiques entre les éléments compris dans les différentes toiles et l'air de la zone intérieure ; et ainsi de permettre de chauffer ou refroidir l'air de la zone intérieure plus rapidement.

Dans un mode de réalisation, la structure démontable comprend une pluralité de batteries rechargeables sur secteur, ladite pluralité de batteries rechargeables étant configurée pour alimenter une pluralité d'équipements électriques de la structure démontable. Un avantage est de pouvoir alimenter les différents équipements électriques compris dans la structure démontable dans les situations où l'accès à une prise secteur n'est pas permis.

Dans un mode de réalisation, la structure démontable comprend des moyens de mesure de la température de la zone intérieure. Un avantage est de disposer d'un indicateur sur la température de la zone intérieure pour pouvoir notamment adapter le chauffage ou le refroidissement en conséquence.

Dans un mode de réalisation, au moins un élément émetteur de chaleur et/ou au moins un élément refroidissant est pilotable par des moyens de commande ; les moyens de commande étant configurés pour commander une pluralité d'éléments connectés électriquement aux éléments de stockage d'énergie électrique. Un avantage est de pouvoir adapter la consommation électrique globale en fonction des besoins. Un autre avantage est de pouvoir faire varier la température de la zone intérieure lorsque cela s'avère nécessaire.

Dans un mode de réalisation, les moyens de mesure de la température sont configurés pour transmettre une valeur de température de la zone intérieure mesurée à un régulateur. Un avantage est d'apporter une information à un instant donné sur la température de la zone intérieure pour adapter la régulation en conséquence.

Dans un mode de réalisation, la toile et/ou la pluralité d'éléments de support comprend des moyens d'acheminement d'un fluide, ledit fluide circulant dans un circuit fermé et ledit fluide étant apte à échanger de l'énergie thermique avec l'air se trouvant dans la zone intérieure de la structure démontable. Un avantage est d'exploiter différents éléments structurels de la structure démontable pour augmenter les transferts thermiques avec l'air de la zone intérieure. Un autre avantage est de limiter la consommation d'énergie par la mise en place d'un circuit fermé.

Dans un mode de réalisation, au moins un élément de stockage d'énergie électrique est configuré pour alimenter une pluralité d'éléments d'éclairage situés à l'intérieur de la structure démontable. Un avantage est d'exploiter l'énergie électrique stockée pour augmenter la luminosité au sein de la structure démontable. Un autre avantage est d'augmenter la température dans la zone intérieure par effet Joule.

Selon un mode de réalisation, la structure démontable comprend un dispositif d'alerte comprenant un émetteur de son, ledit émetteur de son comprenant au moins un récepteur de bus série universel. Un avantage est de pouvoir lire un fichier son depuis n'importe quel appareil pouvant être connecté au dispositif par USB. Un autre avantage est de pouvoir connecter un capteur acoustique par USB à l'émetteur de son, de sorte à émettre une alerte à la réception d'une fréquence particulière, par exemple un cri d'enfant.

Selon un mode de réalisation, la structure démontable comprend un capteur acoustique, ledit capteur acoustique étant connecté à des moyens d'émission ; lesdits moyens d'émission étant configurés pour émettre un signal d'alerte vers un récepteur lorsque le capteur acoustique capte un son d'alerte. Un avantage est notamment de pouvoir alerter d'un danger ou d'un risque potentiel à partir de la réception d'un signal d'une fréquence particulière.

Selon un autre aspect, l'invention concerne un procédé comprenant les étapes suivantes :
- Une étape de définition d'une valeur de température seuil.
- Une étape de réception d'une valeur de température de la zone intérieure par le régulateur.
- Une étape d'alimentation en électricité d'au moins un élément émetteur de chaleur, mise en fonctionnement dudit au moins un élément émetteur de chaleur et mise à l'arrêt de l'ensemble des éléments de refroidissement lorsque la température de la zone intérieure est inférieure à la température seuil.
- Une étape d'alimentation en électricité d'au moins un élément de refroidissement, mise en fonctionnement dudit au moins un élément de refroidissement et mise à l'arrêt de l'ensemble des éléments émetteurs de chaleur lorsque la température de la zone intérieure est supérieure à la température seuil.
- Une étape de mise à l'arrêt de l'ensemble des éléments émetteurs de chaleur et de l'ensemble des éléments de refroidissement lorsque la température de la zone intérieure est égale à la température seuil définie.

Selon un aspect, l'invention concerne une structure démontable comportant :
- une toile comprenant au moins une ouverture;
- une pluralité d'éléments de support aptes à supporter ladite toile;
- au moins un élément de stockage d'énergie électrique pour fournir une quantité d'énergie électrique à au moins un élément émetteur de chaleur en contact avec la toile, ledit au moins un élément émetteur de chaleur étant configuré pour émettre une quantité d'énergie thermique vers une zone intérieure de la structure démontable, ladite zone intérieure étant délimitée par une surface intérieure de la toile ;
la structure étant caractérisée en ce que la toile comporte une couche intérieure et une couche extérieure et des logements situés dans ladite toile pour accueillir au moins un élément de stockage d'énergie électrique formant au moins un support latéral pour maintenir la structure dans une position montée.

Dans un mode de réalisation, la structure comprend une pluralité de logements positionnés entre la couche intérieure et la couche extérieure de la toile pour accueillir des éléments de refroidissement destinés à abaisser la température de la zone intérieure.

Dans un mode de réalisation, la structure comprend des canaux positionnés sur la toile entre la couche intérieure et la couche extérieure, lesdits canaux couvrant et acheminant des câbles électriques reliant les éléments de stockage d'énergie électrique à une pluralité d'équipements électriques de ladite structure.

Dans un mode de réalisation, la structure comprend des logements positionnés dans la toile pour accueillir des équipements connectés électriquement aux éléments de stockage d'énergie électrique, lesdits logements comprenant une ouverture débouchant vers la zone intérieure de la structure.

Dans un mode de réalisation, la structure comprend une pluralité d'axes de pliage s'étendant suivant des directions longitudinales, la structure étant apte à se trouver dans une configuration montée dans laquelle des portions de la toile sont au moins partiellement pliées suivant lesdits axes de pliage.

Selon un cas, la structure comprend au moins un axe de pliage s'étendant latéralement sur ladite structure.

Dans un mode de réalisation, une pluralité d'équipements connectés électriquement aux éléments de stockage d'énergie électrique sont positionnés dans des logements forment des supports latéraux de la structure démontable.

### Brève description des figures

D'autres caractéristiques et avantages de l'invention ressortiront à la lecture de la description détaillée qui suit, en référence aux figures annexées, qui illustrent :
Fig.1 : Une vue de dessus d'une structure démontable selon un mode de réalisation de l'invention comportant une pluralité d'éléments de stockage d'énergie ainsi qu'une pluralité d'éléments alimentés électriquement par les éléments de stockage d'énergie.

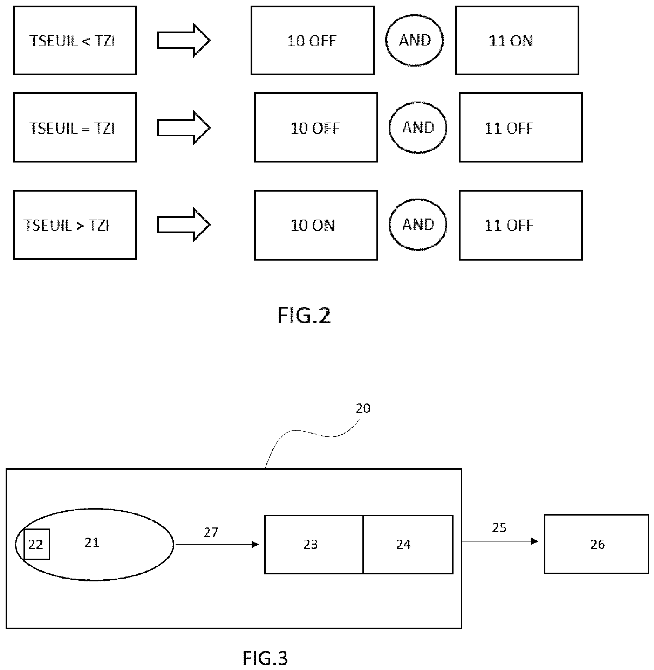

Fig.2 : Un logigramme représentant un procédé de régulation de la température d'une zone intérieure d'une structure démontable selon un mode de l'invention.
Fig.3 : Un schéma représentant les étapes de l'émission d'un signal d'alerte dans un mode de réalisation où la structure démontable comporte un capteur acoustique connecté à des moyens d'émission aptes à émettre un signal d'alerte vers un récepteur.

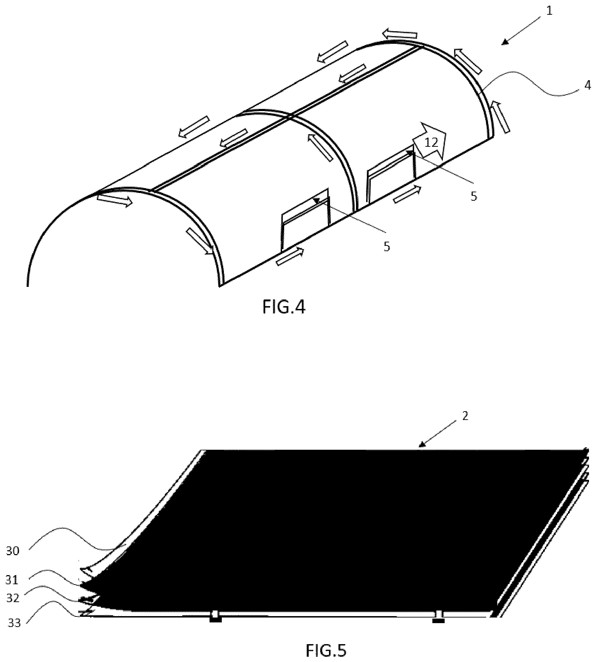

Fig.4 : Un schéma représentant une structure démontable selon un mode de réalisation de l'invention dans lequel la structure démontable comprend des moyens d'acheminement d'un fluide frigorigène et des logements pour accueillir les éléments de stockage d'énergie électrique.
Fig.5 : Un schéma représentatif d'une portion de toile comprenant une pluralité de couches de toile.
Fig.6 : Un schéma représentatif d'une portion de toile comportant une résistance électrique parcourue par un courant électrique et émettant une quantité d'énergie thermique par effet joule.
Fig.7 : Un exemple de structure démontable lorsque celle-ci est pliable suivant plusieurs axes longitudinaux et comprend des éléments de refroidissement positionnés dans la toile.

### Description de l'invention

La suite de la description s'appuie sur divers modes de réalisation de l'invention dans lesquels est mise en oeuvre la structure démontable 1.

Différentes variantes de réalisation sont décrites dans chacun de ces modes de réalisation qui peuvent s'appliquer à un ou plusieurs de ces modes de réalisation. Ainsi, les caractéristiques décrites d'un mode de réalisation sont directement applicables à un autre mode de réalisation. L'invention protège ces différentes combinaisons de caractéristiques décrites au travers de l'ensemble des modes de réalisations.

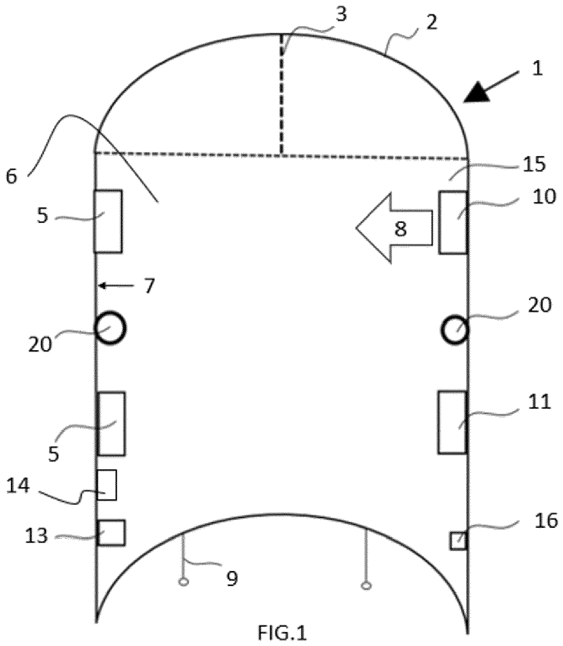

La figure 1 illustre une structure démontable 1 selon l'invention comportant une toile 2 comprenant une ouverture 3, une pluralité d'éléments de support 4 aptes à supporter ladite toile 2, une pluralité d'éléments de stockage d'énergie électrique 5 et une pluralité d'éléments connectés électriquement à ladite pluralité d'éléments de stockage d'énergie 5.

Les dimensions de la structure démontable 1 sont par exemple comprises entre 40cm et 1m pour la longueur, entre 20cm et 40cm pour la hauteur et entre 30cm et 50cm pour la largeur. On donne ci-après différents exemples de gammes de valeurs pour les dimensions de la structure démontable 1. Les dimensions sont données sous la forme [(Lₘᵢₙ, Lₘₐₓ), (lₘᵢₙ, lₘₐₓ), (hₘᵢₙ, hₘₐₓ)] avec Lₘᵢₙ et Lₘₐₓ les longueurs minimales et maximales, lₘᵢₙ et lₘₐₓ les largeurs minimales et maximales et hₘᵢₙ et hₘₐₓ les hauteurs minimales et maximales.

Selon divers exemples, les dimensions de la structure démontable 1 sont comprises dans les gammes suivantes (les valeurs sont données en centimètres) :
[(50, 100), (30, 40), (20,30)] ; [(80,130), (80, 130), (80, 130)] ; [(100, 120), (80, 100), (100,120)] ; [(100, 150), (50, 100), (100,150)] ; [(50, 100), (30, 50), (30,50)]; [(50, 100) ; (50, 100) ; (50, 100)]; [(100, 200) ; (100, 150) ; (100 ;200)], [(30, 70), (20, 40) (30,70)] ; [(100,250), (100, 250), (180, 250)].

Selon un mode de réalisation, la hauteur de la structure 1 au sol est comprise entre 180cm et 250cm.

Un avantage est de permettre à un adulte debout de rentrer dans la structure.

Selon un mode de réalisation, la largeur de la structure 1 est comprise entre 150 et 250cm.

Selon un mode de réalisation, la longueur de la structure 1 est comprise entre 150 et 250cm.

Les exemples de gammes de dimensions ci-dessus sont données à titre indicatif et non-limitatif. Les dimensions choisies pour la structure démontable 1 dépendront des cas d'usage.

Par exemple :
- une structure démontable dont les dimensions se trouvent dans les gammes [(50, 100), (30, 40), (20,30)] est avantageuse pour accueillir un enfant en bas âge.
- Une structure démontable dont les dimensions se trouvent dans les gammes [(100, 250), (100, 250), (180,250)] est avantageuse pour être installée en extérieur et accueillir des personnes debout ou assises sous la structure pour se protéger des conditions extérieures telles que du vent ou de la pluie en hiver ou de la chaleur en été, et assister à un évènement en extérieur, tel qu'à un match de football.
- Une structure démontable dont les dimensions se trouvent dans les gammes [(30, 70), (20, 40) (30,70)] est avantageuse pour couvrir un membre plâtré ou blessé d'un individu.

Selon un mode de réalisation, la hauteur de la structure est constante et inférieure à sa longueur et à la largeur de l'ouverture.

Selon un mode de réalisation, la hauteur de la structure est constante, inférieure à sa longueur et supérieure à la largeur de l'ouverture.

Selon un mode de réalisation, la hauteur de la structure est constante et égale à la largeur de l'ouverture.

Selon un mode de réalisation, la hauteur de la structure démontable 1 par rapport au sol est constante et est inférieure ou égale à la moitié de sa longueur.

Selon un mode de réalisation, la hauteur de la structure démontable 1 au sol est décroissante suivant un axe longitudinal de la structure et en partant de l'ouverture. Dans ce cas, un équipement électrique peut par exemple être disposé dans un logement de la toile 2 à l'extrémité de la structure dont la hauteur est la plus basse. L'équipement est par exemple un équipement électrique tel qu'un ventilateur, un haut-parleur ou une batterie. Avantageusement, la stabilité de la structure est améliorée et l'encombrement est réduit.

### TOILE

Selon un mode de réalisation de l'invention, la toile 2 comprend un matériau synthétique comportant des produits dérivés du pétrole ou de la carbochimie. La toile peut notamment comprendre divers additifs tels que des retardateurs de flammes, des assouplissants, des biocides et/ou des produits imperméabilisants. Les produits imperméabilisants peuvent comprendre du Téflon. Les assouplissants peuvent comprendre des produits chimiques dérivés de l'acide phtalique tels que des phtalates. Les biocides peuvent notamment comprendre des fongicides, des algicides et/ou des bactéricides. Un avantage d'utiliser de tels additifs est de limiter les risques d'infiltration d'eau et de passage du vent à travers la toile. Un autre avantage est de limiter les risques d'inflammation de la toile. Enfin, un avantage est de réduire les risques de dégradation de la toile par des organismes nuisibles.

Selon un mode de réalisation, la toile 2 comprend une ou une pluralité de fibres textiles d'origine végétale telle que du coton. Un avantage est notamment de proposer une toile comprenant des éléments naturels respectueux de l'environnement et facilement recyclable.

Selon un mode de réalisation, la toile 2 comprend une pluralité d'ouvertures 3. Les ouvertures 3 peuvent comprendre des ouvertures à glissière de type fermeture « éclair ». Les ouvertures 3 peuvent également comprendre des éléments auto-agrippants. Les ouvertures 3 peuvent comprendre des moyens de fermeture. Un premier avantage est de permettre l'accès à la structure démontable 1 à un utilisateur. Un second avantage est de permettre de modifier la température par un échange convectif entre l'air situé à l'intérieur de la toile et l'air situé à l'extérieur et de renouveler l'air dans l'espace intérieur de la toile. Un autre avantage est de pouvoir faire varier la luminosité dans la zone située à l'intérieur de la toile. Selon un exemple de réalisation, la structure démontable 10, par exemple de type « tente », comprend une ouverture 3 permettant par exemple le passage de la tête d'un bébé tout en offrant un volume de toile permettant de recouvrir le corps du bébé. Ainsi, selon une telle disposition, la structure démontable 10 peut être fermée à une première extrémité et ouverte à une seconde extrémité, par exemple comme cela est représenté à la figure 1.

Selon un mode de réalisation, la toile 2 comprend deux ouvertures en regard l'une de l'autre. Les deux ouvertures peuvent être de mêmes dimensions, ou de dimensions différentes. Les ouvertures peuvent être de formes géométriques variées. Selon divers exemples, et à titre non limitatif, les ouvertures peuvent former un demi-cercle ou encore un polygone régulier ou irrégulier.

Ce cas est avantageux par exemple lorsque la structure est mise en oeuvre pour soulager un membre douloureux à la suite d'une blessure. Les deux ouvertures peuvent permettre de faire passer la jambe ou le bras d'un individu, de sorte que la structure recouvre complètement la blessure.

Selon un mode de réalisation, la toile 2 comprend une pluralité de canaux intérieurs. La pluralité de canaux intérieurs peut notamment être destinée à permettre le passage d'une pluralité de câbles électriques. Les câbles électriques peuvent être connectés à au moins un élément de stockage d'énergie 5. Selon une variante, les câbles électriques peuvent être branchés sur une prise secteur se trouvant à l'intérieur ou à l'extérieur de la structure démontable 1. La pluralité de câbles électriques peut notamment être connectée à une pluralité d'équipements électriques de la structure démontable 1. Un avantage est d'éviter que les câbles électriques alimentant divers équipements soient apparents au sein d'une zone intérieure 6 de la structure démontable 1 et ainsi de renforcer la sécurité tout en permettant une meilleure optimisation de l'espace dans la zone intérieure 6. On entend par zone intérieure 6 de la structure démontable 1 la zone délimitée par la toile 2 lorsqu'on se trouve à l'intérieur de ladite structure démontable 1.

Selon un mode de réalisation, la toile 2 comprend une couche d'isolation thermique 31. Un avantage est de limiter les transferts thermiques entre la zone intérieure 6 de la structure démontable 1 et ainsi de maintenir plus facilement une température constante à l'intérieur de la structure démontable 1.

Selon un mode de réalisation, la toile 2 comprend une couche de stockage de chaleur 32. La couche de stockage de chaleur 32 comprend des moyens de captation d'une quantité d'énergie thermique 8. La couche de stockage de chaleur 32 est configurée pour restituer une portion de la chaleur à l'air de la zone intérieure 6. La restitution de la chaleur peut être réalisée par convection à l'interface entre l'air de la zone intérieure 6 et la surface intérieure de la couche de stockage de chaleur 32. La couche de stockage de chaleur 32 peut être configurée pour échanger de l'énergie par rayonnement avec une pluralité de surfaces de la structure démontable 1. La pluralité de surfaces peut notamment comprendre une surface de la toile 2.

On définit une couche « intérieure » 32 de toile et une couche « extérieure » 33 de toile. La couche « intérieure » 32 de toile fait référence à la surface de toile la plus proche de la zone intérieure de la structure 1. Les « couches intérieures » 32 et « extérieures » 33 peuvent être limitées à seulement une portion de la toile 2. Ainsi, on désignera une « couche intérieure » 32 et une « couche extérieure » 33 au niveau des logements de la toile, sans que ces couches ne s'étendent à l'ensemble de la toile 2. Ainsi la toile 2 pourra par exemple comprendre plusieurs couches au niveau des logements, et une couche unique sur les autres zones de toiles. Selon un autre exemple, les couches intérieures 32 et extérieures 33 de toile sont présentes sur un pan de toile 2 tel qu'une surface latérale complète, ou encore sur l'ensemble de la toile 2.

Selon un mode de réalisation, la couche de stockage de chaleur 32 est positionnée entre une couche intérieure de toile 33 et une couche extérieure de toile 30. Dans une variante, la toile 2 ne comporte qu'une seule couche qui peut être l'une quelconque des couches parmi la couche isolante 31, la couche extérieure de toile 30 la couche intérieure de toile 33 et la couche de stockage de chaleur 32.

Selon un mode de réalisation, la toile 2 comprend des logements destinés à accueillir au moins un élément de stockage d'énergie 5. Selon une variante, les logements sont destinés à accueillir tout autre type d'équipement de la structure démontable 1. Les logements peuvent être situés sur la surface intérieure de la toile 7. Les logements peuvent également être situés sur une surface extérieure de la toile 2. Selon une variante, les logements sont situés dans la toile 2. Un avantage est d'optimiser l'espace intérieur en limitant l'espace occupé par les équipements. Un autre avantage est de renforcer la sécurité en limitant le risque de contact entre un occupant et les équipements intérieurs.

Selon un mode de réalisation, une pluralité d'équipements alimentés électriquement par les éléments de stockage d'énergie électrique 5 forment des supports latéraux de la structure 1. Un avantage est d'optimiser le maintien en position montée de la structure 1.

La toile 2 comprend un ou plusieurs logements pour accueillir un ou plusieurs éléments de stockage d'énergie électrique 5, tels que des batteries destinées à alimenter les différents équipements de la structure. Les logements s'étendent par exemple sur toute la longueur d'au moins une paroi latérale de la structure démontable 1 pour optimiser le maintien de la structure 1 dans une position montée stable. Selon un autre exemple, les logements couvrent seulement une portion des parois latérales de la structure. Il s'agit par exemple d'une portion basse des parois latérales. Dans ce cas, une portion haute des parois latérales est par exemple destinée à accueillir des équipements électriques tels que des ventilateurs, des haut-parleurs ou encore des équipements d'éclairage.

Selon un cas, la toile 2 comprend des logements pour accueillir les éléments de stockage d'énergie électrique 5 de sorte que la toile recouvre complètement lesdits éléments de stockage d'énergie électrique 5.

Les logements s'étendent par exemple sur une longueur sensiblement égale à un quart de la longueur d'un côté de la structure 1. Selon d'autres exemples, les logements s'étendent sur une longueur égale à sensiblement un tiers, un cinquième ou un dixième de la longueur d'un côté de la structure 1.

Selon un cas, la hauteur des logements est inférieure à la moitié de la hauteur au sol maximale de la structure dans une position montée.

Selon un mode de réalisation, la toile 2 comprend des ouvertures pour accéder aux logements depuis l'intérieur de la toile. De telles ouvertures comprennent par exemple des fermetures éclair, ou encre des systèmes à scratch.

Les logements sont par exemple d'épaisseur égale à 10cm maximum. Selon un autre exemple, l'épaisseur des logements est comprise entre 5cm et 20cm. Selon un autre exemple, l'épaisseur des logements est comprise entre 2cm et 5 cm. Selon un autre exemple, l'épaisseur des logements est comprise entre 1 cm et 10cm. Les gammes de valeurs données précédemment pour l'épaisseur des logements sont données à titre indicatif. L'épaisseur des logements dépendra notamment de la taille des batteries à accueillir, ou encore de la taille des autres équipements positionnés dans lesdits logements.

Selon un mode de réalisation, au moins un logement est destiné à accueillir un élément de lest. Il s'agit par exemple d'un poids ou d'une pièce de béton. Un avantage est de renforcer la stabilité au sol de la structure démontable lorsque celle-ci se trouve dans une position montée.

Selon un mode de réalisation, les logements sont séparés les uns des autres par une paroi formée par un élément de toile. Un avantage est de pouvoir séparer les batteries les unes des autres, par exemple en fonction des équipements électriques qu'elles sont destinées à alimenter.

Selon un mode de réalisation, les logements comprennent des canaux destinés à accueillir des câbles électriques. Les canaux sont par exemple sensiblement cylindriques et de diamètre légèrement supérieur au diamètre des câbles. Les canaux recouvrent et acheminent les câbles qui relient les équipements électriques aux batteries.

Selon un mode de réalisation, la toile comprend des logements pour accueillir une pluralité d'équipements connectés électriquement aux éléments de stockage d'énergie électrique 5. Les équipements sont par exemple des équipements d'éclairage, des haut-parleurs ou encore des ventilateurs.

Selon un mode de réalisation, la structure 1 est pliable selon au moins un axe longitudinal. Cette configuration est avantageuse pour pouvoir transporter facilement la structure 1 d'un endroit à un autre.

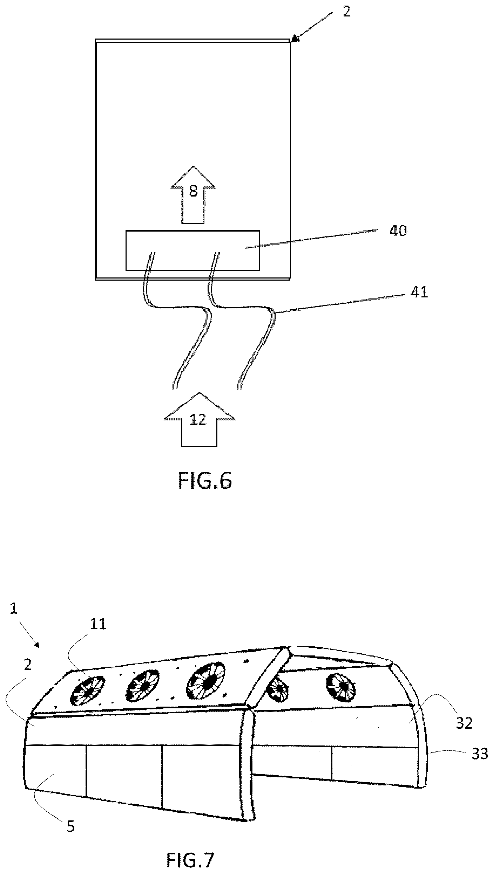

Selon un cas illustré en figure 7, la structure est apte à être dans une configuration montée dans laquelle au moins une portion de toile est au moins partiellement pliée suivant un axe longitudinal de pliage.

Selon un mode de réalisation, la toile 2 comprend des logements pour accueillir au moins un élément émetteur de chaleur 10 et/ou au moins un élément de refroidissement 11. Dans ce cas, les logements sont par exemple situés entre la couche intérieure 32 et la couche extérieure 33 de la toile La figure 7 illustre le cas où la toile comprend des logements pour accueillir des ventilateurs.

Selon un mode de réalisation, la toile 2 comprend des logements pour accueillir des blocs de fraîcheur. Les blocs de fraîcheur sont par exemple positionnés entre la couche intérieure et la couche extérieure de toile 2.

Selon un mode de réalisation, les éléments de refroidissement 11 comprennent les blocs de fraîcheur.

Selon un mode de réalisation, la toile 2 comprend une pluralité de couches séparées d'une épaisseur donnée, les épaisseurs séparant les couches formant les limites latérales des logements destinés à accueillir soit les éléments de stockage d'énergie électrique, soit les éléments de refroidissement, soit les éléments émetteurs de chaleur, soit des blocs de fraîcheur.

Selon un mode de réalisation, au moins un élément de stockage d'énergie électrique 5 et/ou au moins un équipement électrique est positionné dans une paroi supérieure de la structure. On désigne par paroi supérieure une portion de la structure dont l'altitude est la plus élevée par rapport au sol.

Selon un mode de réalisation, la structure démontable 1 comprend des logements pour accueillir les éléments de refroidissement et/ou les éléments émetteurs de chaleur dans des portions latérales inclinées de la structure. Les deuxièmes portions latérales sont par exemple inclinées selon l'un des axes de pliage de la structure.

Selon un mode de réalisation, les éléments de supports 4 aptes à supporter la toile 2 comprennent les éléments de stockage d'énergie électrique 5. Dans un exemple, la toile 2 de la structure est uniquement supportée par des batteries positionnées dans des logements situés dans des parois latérales de la structure.

Selon un mode de réalisation, les éléments de support 4 aptes à supporter la toile 2 comprennent des équipements alimentés électriquement par les éléments de stockage d'énergie électrique 5.

Selon un mode de réalisation, la toile 2 comprend une pluralité de canaux de support. Les canaux de support sont destinés à accueillir une pluralité d'éléments de support 4. Les éléments de supports 4 sont aptes à supporter la toile 2 de la structure démontable 1. Un avantage est de renforcer la stabilité de la structure démontable et ainsi d'optimiser le confort et la sécurité de l'occupant.

Selon un mode de réalisation, la toile 2 comprend un matériau apte à emmagasiner une quantité d'énergie thermique 8. Un avantage est de conserver la chaleur au sein de la zone intérieure 6 de la structure démontable 1 notamment lorsque la température extérieure est basse, de sorte à limiter la consommation d'énergie nécessaire à maintenir une température intérieure optimale.

Selon un mode de réalisation, la toile 2 comprend au moins un moyen d'accroche. Le moyen d'accroche peut notamment être configuré pour accrocher au moins un équipement d'éclairage 9. Un avantage est de pouvoir suspendre au moins un équipement destiné à accroître la luminosité dans la zone intérieure 6 de la structure démontable 1.

Selon un mode de réalisation, la toile 2 comporte des moyens d'acheminement d'un fluide. Dans ce mode de réalisation, le fluide circule dans un circuit fermé au sein de la toile 2. Le fluide peut par exemple comprendre de l'eau. Selon une variante, le fluide circulant dans le circuit fermé peut comprendre tout autre fluide apte à échanger de l'énergie thermique avec l'air présent dans la zone intérieure 6 de la structure démontable 1 ou avec l'environnement extérieur à la structure démontable 1. Le fluide peut notamment comprendre un fluide caloporteur. Le fluide caloporteur peut être un fluide frigorigène. Les moyens d'acheminement du fluide peuvent notamment être connectés à au moins un échangeur de chaleur.

Selon un mode de réalisation, la toile 2 comprend une pluralité d'éléments décoratifs situés sur la surface extérieure de ladite toile 2. Les éléments décoratifs peuvent comprendre des éléments lumineux. Les éléments lumineux peuvent être alimentés par au moins un élément de stockage d'énergie électrique 5. Selon une variante, les éléments décoratifs sont des éléments ne nécessitant pas une alimentation électrique. Selon une autre variante, les éléments décoratifs sont situés sur la surface intérieure de la toile 7.

Selon un mode de réalisation, au moins une portion de la toile 2 comprend un matériau transparent. Il s'agit par exemple d'une bâche PVC transparente. Selon un autre exemple, la toile comprend un film polyéthylène. Un avantage est de permettre à des personnes se trouvant dans la structure de pouvoir observer les évènements extérieurs sans sortir de la structure, par exemple lorsque les conditions météorologiques ne sont pas favorables. Ce mode est particulièrement avantageux lorsque les dimensions de la tente sont suffisantes pour accueillir plusieurs personnes adultes à l'intérieur de la structure.

### ÉLÉMENTS DE SUPPORT

Selon un mode de réalisation, la structure démontable 1 comporte une pluralité d'éléments de support 4 aptes à supporter la toile 2. La pluralité d'éléments de support 4 peut comprendre des éléments longitudinaux. Au moins un élément longitudinal peut être une tige. La pluralité d'éléments de support 4 peut comprendre des moyens d'ancrage. Un avantage des moyens d'ancrage est de permettre le maintien de la structure démontable 1 lorsque celle-ci est positionnée dans un espace extérieur. Selon une variante, les éléments de support 4 comprennent au moins une portion conçue pour être en contact avec le sol, ladite portion formant un support assurant la stabilité de la structure démontable 1. Un avantage est de pouvoir assurer le maintien de la structure démontable 1 dans des conditions où un ancrage dans le sol n'est pas possible, par exemple lorsque la structure démontable 1 est déployée au sein d'une habitation.

Selon un mode de réalisation, au moins deux éléments de support 4 sont connectés entre eux, de sorte à former un agencement unitaire adapté à supporter la toile 2. La connexion entre la pluralité d'éléments de support 4 peut être permise par un emboîtement entre chacun des éléments de support 4. Chaque élément de support peut également être connecté à un autre élément de support par une liaison filaire. Un avantage est de permettre notamment un rangement facilité des éléments de support lors du démontage de la structure démontable 1. Un autre avantage est de permettre une installation facilitée de la structure démontable 1.

Selon un mode de réalisation, la pluralité d'éléments de support 4 comporte une lumière s'étendant selon l'axe longitudinal des éléments de support 4. Dans ce mode de réalisation, chaque élément de support 4 peut comprendre des ouvertures à chaque extrémité longitudinale communicant avec ladite lumière, formant un élément de support 4 creux dans le sens longitudinal. Dans ce mode de réalisation, plusieurs éléments de support peuvent être emboîtés entre eux par leurs extrémités longitudinales, formant ainsi une lumière étendue à travers plusieurs éléments de support. Un avantage d'un tel agencement est notamment de permettre de faire circuler des câbles électriques au sein des lumières pour permettre l'alimentation d'une pluralité d'équipements électriques de la structure démontable 1. Un autre avantage est d'augmenter la compacité de la structure démontable 1.

Selon un mode de réalisation, la pluralité d'éléments de support 4 comprend des moyens d'acheminement d'un fluide. Le fluide peut circuler à travers les éléments de support 4 par l'intermédiaire des lumières. Le fluide peut par exemple comprendre de l'eau. Selon une variante, le fluide circulant dans le circuit fermé peut comprendre tout autre fluide apte à échanger de l'énergie thermique avec l'air présent dans la zone intérieure 6 de la structure démontable 1 ou avec l'environnement extérieur à la structure démontable 1.

Selon un mode de réalisation, la pluralité d'éléments de support 4 est positionnée à l'intérieur de la toile 2. Selon une variante, la toile 2 est posée sur la pluralité d'éléments de support 4 et est maintenue par des moyens d'attache. Les moyens d'attache peuvent comprendre par exemple des éléments auto-agrippants, des ficelles ou des cordes.

Selon un mode de réalisation, la pluralité d'éléments de support 4 comprend au moins un élément décoratif. Cet élément décoratif peut comprendre un élément lumineux. L'élément lumineux peut être alimenté par au moins un élément de stockage d'énergie électrique 5. Selon une variante, l'élément décoratif est un élément ne nécessitant pas d'alimentation électrique. Selon une autre variante, l'élément décoratif est positionné sur la surface intérieure de la toile 7.

### ÉLÉMENTS DE STOCKAGE D'ENERGIE

Selon un mode de réalisation, la structure démontable 1 comprend au moins un élément de stockage d'énergie électrique 5. L'élément de stockage d'énergie électrique 5 peut comprendre par exemple des batteries. Les technologies de batteries utilisées peuvent notamment comprendre les technologies lithium-ion, Ni-Cad, Ni-Mh ou Pb/Sla. Une pluralité de batteries utilisant la même technologie ou n'importe quelle combinaison de batteries utilisant des technologies différentes peut être mise en oeuvre dans le cadre de l'invention.

Selon un mode de réalisation, au moins un élément de stockage d'énergie électrique 5 est configuré pour alimenter au moins un équipement électrique de la structure démontable 1. Un équipement électrique de la structure démontable peut comprendre un élément d'éclairage 9, un élément émetteur de chaleur 10, un élément de refroidissement 11 ou tout autre équipement de la structure démontable nécessitant une alimentation en énergie électrique pour fonctionner.

Selon un mode de réalisation, une pluralité d'éléments de stockage d'énergie 5 est montée entre eux suivant un montage en série. Selon une variante, une pluralité d'éléments de stockage d'énergie électrique 5 est montée entre eux suivant un montage en parallèle. Selon une autre variante, chacun des éléments de stockage d'énergie fonctionne de manière indépendante.

Selon un mode de réalisation, la structure démontable 1 comprend une ou une pluralité de batteries rechargeables sur secteur.

Selon un mode de réalisation, un élément de stockage d'énergie électrique 5 est configuré pour alimenter un unique équipement électrique de la structure démontable 1. Un avantage est de pouvoir contrôler facilement la consommation électrique de chaque équipement suivant le niveau de décharge de l'élément de stockage d'énergie électrique. Selon une variante, un élément de stockage d'énergie électrique 5 est configuré pour alimenter une pluralité d'équipements électriques de la structure démontable 1.

Selon un mode de réalisation, au moins un élément de stockage d'énergie électrique 5 est positionné à l'extérieur de la structure démontable.

Un avantage est d'optimiser l'espace de la zone intérieure 6 exploitable par un utilisateur.

Selon un mode de réalisation, au moins un élément de stockage d'énergie électrique 5 comprend un convertisseur de rayonnement solaire en énergie électrique. Un avantage est de pouvoir recharger la batterie grâce au rayonnement solaire. Le convertisseur peut comprendre une installation photovoltaïque ou un capteur solaire thermique.

Selon un mode de réalisation, au moins un élément de stockage d'énergie électrique 5 est connecté électriquement a au moins un autre élément de stockage d'énergie électrique 5. Cela permet avantageusement de décharger une quantité d'énergie électrique 12 stockée dans un élément de stockage d'énergie électrique 5 dans un autre élément de stockage d'énergie électrique 5.

Selon un mode de réalisation, au moins un élément de stockage d'énergie électrique 5 comprend des moyens d'information visuels. Les moyens d'information visuels peuvent être configurés pour informer un utilisateur sur le taux de charge dudit au moins un élément de stockage d'énergie électrique 5. Un avantage est de pouvoir contrôler le taux de charge de chacun des éléments de stockage d'énergie électrique 5 en temps réel. Un autre avantage est de pouvoir évaluer en temps réel la consommation électrique d'au moins un équipement électrique de la structure démontable 1.

Dans un mode de réalisation, au moins un élément de stockage d'énergie électrique 5 forme un support latéral de la structure démontable 1 pour maintenir ladite structure démontable 1 dans une position montée. Un avantage est notamment d'améliorer la stabilité du système.

### ÉLÉMENT ÉMETTEUR DE CHALEUR

Selon un mode de réalisation, la structure démontable 1 comprend au moins un élément émetteur de chaleur 10. Au moins un élément émetteur de chaleur 10 est en contact avec la toile 2 de la structure démontable 1. Au moins un élément émetteur de chaleur 10 est configuré pour émettre une quantité d'énergie thermique 8 vers la zone intérieure 6 de la structure démontable 1. Par « en contact avec la toile », il sera entendu que chaque élément émetteur de chaleur 10 se trouve soit :
- En contact avec la surface intérieure de la toile 7 et est maintenu en contact avec ladite toile 2 par des moyens tels que des supports, des moyens d'attache, ou tout autre moyen de liaison entre la surface intérieure de la toile 7 et l'élément émetteur de chaleur 10 ;
- A l'intérieur de la toile 2, positionné entre la surface intérieure de la toile 7 et une surface extérieure de ladite toile ;
- En contact avec la surface extérieure de la toile et est maintenu en contact avec ladite toile 2 par des moyens tels que des supports, des moyens d'attache, ou tout autre moyen de liaison ;
- Dans un mode de réalisation dans lequel la toile 2 comprend une pluralité de couches, maintenu à n'importe laquelle des couches par des moyens tels que des supports, des moyens d'attache, ou tout autre moyen de liaison ou encore positionné entre n'importe quelle couche de la toile 2.

Selon un mode de réalisation, au moins un élément émetteur de chaleur 10 comprend une résistance électrique 40. La résistance électrique 40 peut être traversée par une quantité d'énergie électrique 12. La résistance électrique 40 peut être configurée pour émettre la quantité d'énergie thermique 8 vers la zone intérieure 6 par effet Joule. La quantité d'énergie électrique 12 peut être acheminée vers la résistance électrique 40 par des moyens d'alimentation 41. Selon une variante, au moins un élément émetteur de chaleur 10 comprend un autre composant électrique ou électronique apte à émettre de la chaleur lorsque ledit composant est traversé par un courant électrique.

Selon un mode de réalisation, au moins un élément émetteur de chaleur 10 comprend un matériau à changement de phase apte à stocker la quantité d'énergie thermique 8 et à la restituer à la zone intérieure 6. Le matériau à changement de phase peut comprendre un matériau eutectique.

Selon un mode de réalisation, au moins un élément émetteur de chaleur comprend un radiateur électrique. Selon une variante, au moins un élément émetteur de chaleur comprend un chauffage soufflant apte à émettre la quantité d'énergie thermique 8 sous la forme d'air chaud soufflé par ledit chauffage soufflant. Au moins un élément émetteur de chaleur 10 peut être alimenté par au moins un élément de stockage d'énergie 5.

Selon un mode de réalisation, au moins un élément émetteur de chaleur 10 comprend un échangeur de chaleur. L'échangeur de chaleur peut être intégré à des moyens d'acheminement d'un fluide. Le fluide peut circuler à travers un circuit fermé. Dans ce mode de réalisation, une partie du circuit fermé peut se trouver à l'extérieur de la structure démontable 1 et peut comprendre un radiateur ou une pluralité d'ailettes. Les ailettes peuvent être chauffées par rayonnement solaire. Les ailettes peuvent transmettre une quantité de chaleur issue du rayonnement solaire au fluide circulant à travers le circuit fermé.

Selon un mode de réalisation, une pluralité d'éléments émetteurs de chaleur 10 est répartie uniformément sur la toile 2 de la structure démontable 1. Un avantage est de permettre une diffusion uniforme de la chaleur dans la zone intérieure 6. Selon une variante, une pluralité d'éléments émetteurs de chaleurs 10 est répartie selon n'importe quel agencement sur la toile 2 de la structure démontable 1.

Selon un mode de réalisation, une pluralité d'éléments émetteurs de chaleur 10 est liée entre eux structurellement. Un avantage est d'augmenter la surface d'émission de chaleur pour améliorer l'efficacité du chauffage dans la zone intérieure 6 de la structure démontable 1. Selon une variante, une pluralité d'éléments émetteurs de chaleur 10 est connectée électriquement entre eux. Selon ce mode de réalisation, la pluralité d'éléments émetteurs de chaleur 10 est avantageusement parcourue par un même courant électrique.

Selon un mode de réalisation, au moins un élément émetteur de chaleur 10 comprend des moyens de connexion à une source d'alimentation électrique. La source d'alimentation électrique peut comprendre un élément de stockage d'énergie électrique 5. Selon une variante, la source d'alimentation électrique peut comprendre une prise secteur ou toute autre source apte à délivrer une énergie électrique.

Selon un mode de réalisation, au moins un élément émetteur de chaleur 10 est connecté à des moyens de mesure de la température 13 tels qu'un capteur de température. Selon ce mode de réalisation, les moyens de mesure de la température 13 sont configurés pour mesurer la température de la zone intérieure 6.

Selon un mode de réalisation, la structure démontable 1 comprend un régulateur 14. Le régulateur 14 peut comprendre des moyens de connexion. Le régulateur 14 peut être connecté avec les moyens de mesure de la température 13 via les moyens de connexion.

Dans un mode de réalisation, le régulateur 14 est configuré pour réceptionner une valeur de température mesurée par les moyens de mesure de la température 13. Les moyens de mesure de température 13 comprennent un émetteur configuré pour transmettre au moins une valeur de température mesurée au régulateur 14 via les moyens de connexion.

Selon un mode de réalisation, au moins un élément émetteur de chaleur 10 peut être configuré pour émettre une quantité d'énergie thermique 8 lorsque la température mesurée par les moyens de mesure de la température 13 descend en deçà d'une valeur de température seuil TSEUIL et pour cesser d'émettre ladite quantité d'énergie thermique 8 lorsque la température mesurée par les moyens de mesure de la température 13 atteint ou dépasse la température seuil TSEUIL.

### ÉLÉMENT DE REFROIDISSEMENT

Selon un mode de réalisation, la structure démontable 1 comprend au moins un élément de refroidissement 11. Au moins un élément de refroidissement 11 est apte à abaisser la température de l'air situé dans la zone intérieure 6.

Selon un mode de réalisation, l'élément de refroidissement 11 comprend un organe rotatif. L'organe rotatif est apte à brasser une portion de l'air situé dans la zone intérieure 6 de la structure démontable 1. Dans ce mode de réalisation, l'organe rotatif peut comprendre des pales ou des ailettes. Dans ce mode de réalisation, l'élément de refroidissement 11 peut également comprendre une grille protectrice. Un avantage est de limiter les risques d'accident en cas de contact avec les pales ou les ailettes de l'élément de refroidissement lorsque celles-ci sont en rotation.

Selon un mode de réalisation, au moins un élément de refroidissement 11 comprend des moyens de connexion à une source d'alimentation électrique. La source d'alimentation électrique peut comprendre un élément de stockage d'énergie électrique 5. Selon une variante, la source d'alimentation électrique peut comprendre une prise secteur ou toute autre source apte à délivrer une énergie électrique.

Selon un mode de réalisation, au moins un élément de refroidissement 11 comprend un appareil de climatisation. L'appareil de climatisation peut comprendre par exemple un climatiseur transportable. Dans ce mode de réalisation, l'appareil de climatisation comprend au moins une gaine de soufflage, au moins une gaine d'air et/ou au moins un dispositif de ventilation. L'appareil de climatisation peut également comprendre au moins un condenseur et au moins un évaporateur. L'appareil de climatisation peut également comprendre un système de filtration.

Selon un mode de réalisation, l'élément de refroidissement 11 peut comprendre un élément émetteur de chaleur 10. Dans ce mode de réalisation, l'élément émetteur de chaleur 10 compris dans l'élément de refroidissement 11 est configuré pour émettre une quantité d'énergie thermique 8 vers la zone intérieure 6 de la structure démontable 1. Dans ce mode de réalisation, l'élément de refroidissement 11 peut avantageusement être utilisé pour à la fois augmenter ou abaisser la température de la zone intérieure 6 de la structure démontable 1.

Selon un mode de réalisation, la structure démontable 1 comporte une pluralité d'éléments de refroidissement 11. La pluralité d'éléments de refroidissement 11 peut être agencée sur la surface intérieure de la toile 7. Selon une variante, la pluralité d'éléments de refroidissement 11 peut être positionnée sur une toile de sol 15 de la structure démontable 1. Selon une autre variante, un unique élément de refroidissement 11 est positionné sur la surface intérieure de la toile 7 ou sur la toile de sol 15. La pluralité d'éléments de refroidissement 11 comprend des moyens de connexion électrique à une même source d'alimentation électrique et est alimentée par ladite même source d'alimentation électrique. La source d'alimentation électrique peut comprendre un élément de stockage d'énergie électrique 5. Selon une variante, la source d'alimentation électrique peut comprendre une prise secteur ou toute autre source apte à délivrer une énergie électrique. Selon une variante, la pluralité d'éléments de refroidissement 11 comprend des moyens de connexion électrique à une pluralité d'éléments de stockage d'énergie électrique 5 ou à une pluralité de sources d'énergie différentes.

Selon un mode de réalisation, au moins un élément de refroidissement 11 est configuré pour prélever une quantité d'énergie de l'air présent dans la zone intérieure 6 de la structure démontable 1 et pour décharger ladite quantité d'énergie dans l'air présent à l'extérieur de la structure démontable 1. Un avantage est de prélever une quantité d'énergie dans l'air de la zone intérieure 6 notamment d'énergie calorifique et ainsi d'abaisser la température de l'air présent dans ladite zone intérieure 6.

Selon un mode de réalisation, au moins un élément de refroidissement 11 comprend au moins un évaporateur, au moins un condenseur, au moins un détendeur et au moins un compresseur tous reliés entre eux par des moyens d'acheminement d'au moins un fluide. Le fluide peut comprendre un fluide frigorigène ou « réfrigérant ».

Selon un mode de réalisation, au moins un élément de refroidissement 11 est en contact avec la toile de sol 15 de la structure démontable 1.

### MOYENS DE COMMANDE

Selon un mode de réalisation, la structure démontable comprend des moyens de commande 16. Les moyens de commande 16 sont configurés pour commander au moins un équipement électrique de la structure démontable 1.

Selon un mode de réalisation, les moyens de commande 16 sont intégrés à au moins un équipement électrique de la structure démontable 1. Les moyens de commande 16 peuvent comprendre un interrupteur. L'interrupteur permet notamment de fermer le circuit électrique pour permettre l'alimentation en électricité d'au moins un équipement électrique ou d'ouvrir le circuit électrique pour stopper l'alimentation en électricité d'au moins un équipement électrique.

Selon un mode de réalisation, les moyens de commande 16 comprennent une interface numérique. L'interface numérique comporte notamment un écran. L'écran peut être tactile. Selon une variante, les moyens de commande 16 comprennent un ou une pluralité de boutons poussoirs. Selon une autre variante, les moyens de commande comprennent un ou une pluralité de capteurs. Au moins un capteur peut comprendre un capteur de mouvement. La détection d'un mouvement peut avantageusement entraîner la mise en marche d'au moins un équipement électrique de la structure démontable 1. Les moyens de commande 16 selon ce mode de réalisation peuvent être configurés pour commander une pluralité d'équipements électriques de la structure démontable 1.

Selon un mode de réalisation, les moyens de commande 16 et un ou une pluralité d'équipements électriques de la structure démontable 1 sont connectés entre eux par un ou une pluralité de câbles. Les moyens de commande 16 et les équipements électriques peuvent échanger des informations par l'intermédiaire des câbles. L'information échangée peut comprendre une instruction de commande. La commande peut comprendre une commande de pilotage d'un équipement électrique par les moyens de commande 16. Selon une variante, les moyens de commande 16 et un ou une pluralité d'équipements électriques sont configurés pour communiquer par l'intermédiaire d'un système sans fil. Le système sans fil peut comprendre par exemple un système « Bluetooth ».

Selon un mode de réalisation, au moins un équipement électrique de la structure démontable 1 comprend des moyens de communication avec les moyens de commande 16. Les moyens de commande 16 peuvent comprendre un calculateur. Le calculateur peut être un téléphone intelligent communément appelé « smartphone ». La commande d'au moins un équipement électrique de la structure démontable 1 peut être réalisée depuis une application installée sur le téléphone intelligent.

Selon un mode de réalisation, au moins un élément émetteur de chaleur 10 et/ou au moins un élément de refroidissement 11 comprend des moyens de communication pour communiquer avec les moyens de commande 16. Au moins un élément émetteur de chaleur 10 et/ou au moins un élément de refroidissement 11 peut être pilotable par les moyens de commande 16.

Selon un mode de réalisation, les moyens de commande MC sont configurés pour commander au moins un élément connecté électriquement aux moyens de stockage d'énergie électrique 5.

### APPLICATIONS CONNEXES

Selon un mode de réalisation, la structure démontable 1 comprend un dispositif d'alerte 20.

Le dispositif d'alerte 20 comprend au moins un émetteur de son 21. L'émetteur de son 21 comprend au moins un récepteur de bus série universel 22. L'émetteur de son 21 est connecté électriquement à au moins un élément de stockage d'énergie électrique 5. Selon une variante, l'émetteur de son 21 est connecté électriquement à une prise secteur ou à toute autre source d'approvisionnement en énergie électrique. L'émetteur de son 21 comprend des moyens de commande intégrés. Les moyens de commande intégrés peuvent être intégrés à la structure de l'émetteur de son 21. Selon une variante, l'émetteur de son 21 est commandé par les moyens de commande 16. L'émetteur de son 21 peut comprendre une interface « Bluetooth ».

Selon un mode de réalisation, le dispositif d'alerte 20 comprend un capteur acoustique 23. Le capteur acoustique 23 peut être connecté à des moyens d'émission 24. Les moyens d'émission 24 sont configurés pour émettre un signal d'alerte 25 vers un récepteur 26 lorsque le capteur acoustique 23 capte un son d'alerte 27. Le son d'alerte 25 peut être émis par l'émetteur de son 21.

Selon un mode de réalisation, la structure démontable 1 est un habitat temporaire. La structure démontable 1 peut comprendre une structure rigide. Dans ce mode de réalisation, la structure démontable 1 peut être par exemple une tente.

### Procédé

Selon un second aspect, l'invention concerne un procédé de régulation de la température de la zone intérieure TZI de la structure démontable 1 comprenant les étapes suivantes :
- Une première étape de définition d'une valeur de température seuil TSEUIL ;
- Une seconde étape de réception d'une valeur de température de la zone intérieure TZI par le régulateur 14 ;
- Une troisième étape d'alimentation en électricité d'au moins un élément émetteur de chaleur 10, mise en fonctionnement dudit au moins un élément émetteur de chaleur 10 et mise à l'arrêt de l'ensemble des éléments de refroidissement 11 lorsque la température de la zone intérieure TZI est inférieure à la température seuil TSEUIL ;

- Une quatrième étape d'alimentation en électricité d'au moins un élément de refroidissement 11, mise en fonctionnement dudit au moins un élément de refroidissement 11 et mise à l'arrêt de l'ensemble des éléments émetteurs de chaleur 10 lorsque la température de la zone intérieure TZI est supérieure à la température seuil TSEUIL ;
- Une cinquième étape de mise à l'arrêt de l'ensemble des éléments émetteurs de chaleur 10 et de l'ensemble des éléments de refroidissement 11 lorsque la température de la zone intérieure 6 est égale à la température seuil TSEUIL définie.

Avantageusement, le procédé selon le second aspect de l'invention permet de réguler la température de la zone intérieure 6 de la structure démontable 1 et d'éviter les risques pour les occupants pouvant découler d'une température trop basse ou trop élevée.

En résumé, l'invention propose une structure démontable stable, autonome en énergie, facilement transportable et adaptée à de nombreux cas d'usages.

## Revendications

1. Structure démontable (1) comportant :
▪ une toile (2) comprenant au moins une ouverture (3);
▪ une pluralité d'éléments de support (4) aptes à supporter ladite toile (2) ;
▪ au moins un élément de stockage d'énergie électrique (5) pour fournir une quantité d'énergie électrique (12) à au moins un élément émetteur de chaleur (10) en contact avec la toile (2), ledit au moins un élément émetteur de chaleur (10) étant configuré pour émettre une quantité d'énergie thermique (8) vers une zone intérieure (6) de la structure démontable (1), ladite zone intérieure (6) étant délimitée par une surface intérieure de la toile (7) ;
**caractérisée en ce que** :
▪ la toile (2) comporte une couche intérieure (32) et une couche extérieure (33) et des logements situés dans ladite toile (2) pour accueillir ledit au moins un élément de stockage d'énergie électrique (5) formant au moins un support latéral pour maintenir la structure (1) dans une position montée.

2. Structure démontable (1) selon la revendication 1 **caractérisée en ce qu'**elle comprend une pluralité de logements positionnés entre la couche intérieure (32) et la couche extérieure (33) de la toile (2) pour accueillir des éléments de refroidissement (11) destinés à abaisser la température de la zone intérieure (6).

3. Structure démontable (1) selon l'une quelconque des revendications précédentes, **caractérisée en ce qu'**elle comprend des logements positionnés dans la toile (2) pour accueillir des équipements connectés électriquement aux éléments de stockage d'énergie électrique (5), lesdits logements comprenant une ouverture débouchant vers la zone intérieure (6) de la structure (1).

4. Structure démontable (1) selon l'une quelconque des revendications précédentes dans laquelle une pluralité d'équipements connectés électriquement aux éléments de stockage d'énergie électrique (5) sont positionnés dans des logements et forment des supports latéraux de la structure démontable 1.

5. Structure démontable (1) selon l'une quelconque des revendications précédentes, **caractérisée en ce qu'**elle comprend des canaux positionnés sur la toile (2) entre la couche intérieure (32) et la couche extérieure (33), lesdits canaux couvrant et acheminant des câbles électriques reliant les éléments de stockage d'énergie électrique (5) à une pluralité d'équipements électriques de ladite structure (1).

6. Structure démontable (1) selon l'une quelconque des revendications précédentes dans laquelle la structure comprend une pluralité d'axes de pliage s'étendant suivant des directions longitudinales, la structure (1) étant apte à se trouver dans une configuration montée dans laquelle des portions de la toile (2) sont au moins partiellement pliées suivant lesdits axes de pliage.

7. Structure démontable (1) selon l'une quelconque des revendications précédentes **caractérisée en ce qu'**elle comprend des moyens de mesure de la température (13) de la zone intérieure (6) configurés pour transmettre une valeur de température de la zone intérieure (TZI) mesurée à un régulateur (14).

8. Structure démontable (1) selon l'une quelconque des revendications précédentes **caractérisée en ce que** la toile (2) et/ou la pluralité d'éléments de support comprend des moyens d'acheminement d'un fluide, ledit fluide circulant dans un circuit fermé et ledit fluide étant apte à échanger de l'énergie thermique avec l'air se trouvant dans la zone intérieure (6) de la structure démontable (1).

9. Structure démontable (1) selon l'une quelconque des revendications précédentes, **caractérisée en ce qu'**au moins un élément de stockage d'énergie électrique (5) est configuré pour alimenter une pluralité d'éléments d'éclairage (9) situés à l'intérieur de la structure démontable (1).

10. Structure démontable (1) selon l'une quelconque des revendications précédentes, **caractérisée en ce qu'**elle comprend dispositif d'alerte (20) comprenant un émetteur de son (21), ledit émetteur de son (21) comprenant au moins un récepteur de bus série universel (22).

11. Structure démontable (1) selon l'une quelconque des revendications précédentes **caractérisée en ce qu'**elle comprend un capteur acoustique (23), ledit capteur acoustique (23) étant connecté à des moyens d'émission (24) ; lesdits moyens d'émission (24) étant configurés pour émettre un signal d'alerte (25) vers un récepteur (26) lorsque le capteur acoustique (23) capte un son d'alerte (27).

12. Procédé de régulation de la température de la zone intérieure (TZI) de la structure démontable (1) selon la revendication 7, comprenant les étapes suivantes :
▪ Définition d'une valeur de température seuil (TSEUIL) ;
▪ Réception d'une valeur de température de la zone intérieure (TZI) par le régulateur (26) ;
▪ Alimentation en électricité d'au moins un élément émetteur de chaleur (10), mise en fonctionnement dudit au moins un élément émetteur de chaleur (10) et mise à l'arrêt de l'ensemble des éléments de refroidissement (11) lorsque la température de la zone intérieure (TZI) est inférieure à la température seuil (TSEUIL) ;
▪ Alimentation en électricité d'au moins un élément de refroidissement (11), mise en fonctionnement dudit au moins un élément de refroidissement (11) et mise à l'arrêt de l'ensemble des éléments émetteurs de chaleur (10) lorsque la température de la zone intérieure (TZI) est supérieure à la température seuil (TSEUIL) ;
▪ Mise à l'arrêt de l'ensemble des éléments émetteurs de chaleur (10) et de l'ensemble des éléments de refroidissement (11) lorsque la température de la zone intérieure (TZI) est égale à la température seuil (TSEUIL) définie.

## Patentansprüche

1. Zerlegbare Struktur (1) mit:
▪ einem Gewebe (2), das wenigstens eine Öffnung (3) umfasst;
▪ mehreren Stützelemente (4), die geeignet sind, das Gewebe (2) zu tragen;
▪ wenigstens einem elektrischen Energiespeicherelement (5) zur Bereitstellung einer Menge elektrischer Energie (12) an wenigstens ein mit dem Gewebe (2) in Kontakt stehendes wärmeabgebendes Element (10), wobei das wenigstens eine wärmeabgebende Element (10) so eingerichtet ist, dass es eine Menge thermischer Energie (8) an einen Innenbereich (6) der zerlegbaren Struktur (1) abgibt, wobei der Innenbereich (6) durch eine innere Oberfläche des Gewebes (7) begrenzt ist;
**dadurch gekennzeichnet, dass**:
▪ das Gewebe (2) eine innere Schicht (32) und eine äußere Schicht (33) und im Gewebe (2) befindliche Aussparungen zur Aufnahme des wenigstens einen elektrischen Energiespeicherelements (5) aufweist, das wenigstens eine seitliche Stütze bildet, um die Struktur (1) in einer montierten Position zu halten.

2. Zerlegbare Struktur (1) nach Anspruch 1, **dadurch gekennzeichnet, dass** sie mehrere Aussparungen umfasst, die zwischen der inneren Schicht (32) und der äußeren Schicht (33) des Gewebes (2) positioniert sind, um Kühlelemente (11) aufzunehmen, die dazu dienen, die Temperatur des Innenbereichs (6) zu senken.

3. Zerlegbare Struktur (1) nach einem der vorhergehenden Ansprüche, **dadurch gekennzeichnet, dass** sie Aussparungen umfasst, die im Gewebe (2) positioniert sind, um Geräte aufzunehmen, die elektrisch mit den elektrischen Energiespeicherelementen (5) verbunden sind, wobei die Aussparungen eine Öffnung umfassen, die in den Innenbereich (6) der Struktur (1) mündet.

4. Zerlegbare Struktur (1) nach einem der vorhergehenden Ansprüche, wobei mehrere elektrisch mit den elektrischen Energiespeicherelementen (5) verbundene Geräte in Aussparungen positioniert sind und seitliche Träger der zerlegbaren Struktur 1 bilden.

5. Zerlegbare Struktur (1) nach einem der vorhergehenden Ansprüche, **dadurch gekennzeichnet, dass** sie Kanäle umfasst, die auf dem Gewebe (2) zwischen der inneren Schicht (32) und der äußeren Schicht (33) positioniert sind, wobei diese Kanäle elektrische Kabel abdecken und führen, die die elektrischen Energiespeicherelemente (5) mit mehreren elektrischen Geräten der genannten Struktur (1) verbinden.

6. Zerlegbare Struktur (1) nach einem der vorhergehenden Ansprüche, wobei die Struktur mehrere Faltachsen umfasst, die sich in Längsrichtungen erstrecken, wobei sich die Struktur (1) in einer montierten Konfiguration befinden kann, in der Abschnitte des Gewebes (2) wenigstens teilweise entlang der genannten Faltachsen gefaltet sind.

7. Zerlegbare Struktur (1) nach einem der vorhergehenden Ansprüche, **dadurch gekennzeichnet, dass** sie Mittel zur Temperaturmessung (13) des Innenbereichs (6) umfasst, die so eingerichtet sind, dass sie einen gemessenen Temperaturwert des Innenbereichs (TZI) an einen Regler (14) übermitteln.

8. Zerlegbare Struktur (1) nach einem der vorhergehenden Ansprüche, **dadurch gekennzeichnet, dass** das Gewebe (2) und/oder die mehreren Stützelemente Fördermittel für eine Flüssigkeit umfassen, wobei die Flüssigkeit in einem geschlossenen Kreislauf zirkuliert und die Flüssigkeit in der Lage ist, Wärmeenergie mit der Luft auszutauschen, die sich im Innenbereich (6) der zerlegbaren Struktur (1) befindet.

9. Zerlegbare Struktur (1) nach einem der vorhergehenden Ansprüche, **dadurch gekennzeichnet, dass** wenigstens ein elektrisches Energiespeicherelement (5) so eingerichtet ist, dass es mehrere Beleuchtungselemente (9) versorgt, die sich innerhalb der zerlegbaren Struktur (1) befinden.

10. Zerlegbare Struktur (1) nach einem der vorhergehenden Ansprüche, **dadurch gekennzeichnet, dass** sie eine Warnvorrichtung (20) umfasst, die einen Tonsender (21) umfasst, wobei der Tonsender (21) wenigstens einen universellen seriellen Bus-Empfänger (22) umfasst.

11. Zerlegbare Struktur (1) nach einem der vorhergehenden Ansprüche, **dadurch gekennzeichnet, dass** sie einen akustischen Sensor (23) umfasst, wobei der akustische Sensor (23) mit Sendemitteln (24) verbunden ist; wobei die Sendemittel (24) so eingerichtet sind, dass sie ein Warnsignal (25) an einen Empfänger (26) senden, wenn der akustische Sensor (23) einen Warnton (27) empfängt.

12. Verfahren zur Temperaturregelung des Innenbereichs (TZI) der zerlegbaren Struktur (1) nach Anspruch 7, folgende Schritte umfassend:
▪ Definition eines Temperaturgrenzwerts (TGRENZWERT);
▪ Empfang eines Innenbereich-Temperaturwerts (TZI) vom Regler (26);
▪ Stromversorgung von wenigstens einem wärmeabgebenden Element (10), Einschalten des wenigstens einen wärmeabgebenden Elements (10) und Abschalten aller Kühlelemente (11), wenn die Innenbereich-Temperatur (TZI) unter dem Temperaturgrenzwert (TGRENZWERT) liegt;
▪ Stromversorgung von wenigstens einem Kühlelement (11), Einschalten des wenigstens einen Kühlelements (11) und Abschalten aller wärmeabgebenden Elemente (10), wenn die Innenbereich-Temperatur (TZI) über dem Temperaturgrenzwert (TGRENZWERT) liegt;
▪ Abschalten aller wärmeabgebenden Elemente (10) und aller Kühlelemente (11), wenn die Innenbereich-Temperatur (TZI) gleich dem festgelegten Temperaturgrenzwert (TGRENZWERT) ist.

## Claims

1. A demountable structure (1) comprising:
▪ a cloth (2) comprising at least one aperture (3);
▪ a plurality of supporting elements (4) capable of supporting said cloth (2);
▪ at least one electric energy storage element (5) to provide an amount of electric energy (12) to at least one heat emitting element (10) in contact with the cloth (2), said at least one heat emitting element (10) being configured to emits an amount of thermal energy (8) to an internal zone (6) of the demountable structure (1), said internal zone (6) being delimited by an inner surface of the cloth (7);
**characterized in that**:
▪ the cloth (2) comprises an internal layer (32) and an external layer (33) and housings located in said cloth (2) to accommodate said at least one electric energy storage element (5) forming at least one lateral support to hold the structure (1) in a mounted position.

2. The demountable structure (1) according to claim 1, **characterized in that** it comprises a plurality of housings positioned between the internal layer (32) and the external layer (33) of the cloth (2) to accommodate cooling elements (11) for lowering temperature of the internal zone (6).

3. The demountable structure (1) according to any one of the preceding claims, **characterized in that** it comprises housings positioned in the cloth (2) to accommodate equipment electrically connected to the electric energy storage elements (5), said housings comprising an opening leading to the internal zone (6) of the structure (1).

4. The demountable structure (1) according to any one of the preceding claims, wherein a plurality of equipment electrically connected to the electric energy storage elements (5) are positioned in housings and form lateral supports of the demountable structure 1.

5. The demountable structure (1) according to any one of the preceding claims, **characterized in that** it comprises channels positioned on the cloth (2) between the internal layer (32) and the external layer (33), said channels covering and conveying electrical cables connecting the electric energy storage elements (5) to a plurality of electrical equipment of said structure (1).

6. The demountable structure (1) according to any one of the preceding claims, wherein the structure comprises a plurality of folding axes extending along longitudinal directions, the structure (1) being capable of being in a mounted configuration in which portions of the cloth (2) are at least partially folded along said folding axes.

7. The demountable structure (1) according to any one of the preceding claims, **characterized in that** it comprises means for measuring temperature (13) of the internal zone (6) configured to transmit a temperature value of the internal zone (TZI) measured to a regulator (14).

8. The demountable structure (1) according to any one of the preceding claims, **characterized in that** the cloth (2) and/or the plurality of support elements comprise means for conveying a fluid, said fluid circulating in a closed circuit and said fluid being capable of exchanging thermal energy with air located in the internal zone (6) of the demountable structure (1).

9. The demountable structure (1) according to any one of the preceding claims, **characterized in that** at least one electric energy storage element (5) is configured to supply a plurality of lighting elements (9) located inside the demountable structure (1).

10. The demountable structure (1) according to any one of the preceding claims, **characterized in that** it comprises an alert device (20) comprising a sound emitter (21), said sound emitter (21) comprising at least one universal serial bus receiver (22).

11. The demountable structure (1) according to any one of the preceding claims, **characterized in that** it comprises an acoustic sensor (23), said acoustic sensor (23) being connected to emission means (24); said emission means (24) being configured to transmit an alert signal (25) to a receiver (26) when the acoustic sensor (23) senses an alert sound (27).

12. A method for regulating temperature of the internal zone (TZI) of the demountable structure (1) according to claim 7, comprising the following steps of:
▪ Defining a threshold temperature value (TSEUIL);
▪ Receiving a temperature value of the internal zone (TZI) from the regulator (26);
▪ Supplying at least one heat emitting element (10) with electricity, operating said at least one heat emitting element (10) and shutting down all the cooling elements (11) when the temperature of the internal zone (TZI) is below the threshold temperature (TSEUIL);
▪ Supplying at least one cooling element (11) with electricity, operating the at least one cooling element (11) and shutting down all the heat emitting elements (10) when the temperature of the internal zone (TZI) exceeds the threshold temperature (TSEUIL);
▪ Shutting down all heat emitting elements (10) and all cooling elements (11) when the temperature of the internal zone (TZI) is equal to the threshold temperature (TSEUIL) defined.
